# EUROPÄISCHE PATENTSCHRIFT

(11) **EP 0 333 692 B1**
(45) Veröffentlichungstag und Bekanntmachung des Hinweises auf die Patenterteilung: **08.09.1993**
(21) Anmeldenummer: 89890003.0
(22) Anmeldetag: 04.01.1989
(51) Int. Cl.: F16H 55/54

(54) **Rad mit veränderbarem Durchmesser**
Variable-diameter wheel
Roue à diamètre variable

(30) Priorität: 14.03.1988 AT 689/88
(43) Veröffentlichungstag der Anmeldung: 20.09.1989
(73) Patentinhaber: Lukatsch, Johann, A-9065 Ebental (Kärnten) (AT)
(72) Erfinder: Lukatsch, Johann, A-9065 Ebental (Kärnten) (AT)

(56) Entgegenhaltungen:
- DE-A- 3 137 018
- DE-C- 480 240
- DE-C- 493 825
- US-A- 999 530
- US-A- 4 453 923

## Beschreibung

Die Erfindung betrifft ein Rad mit veränderbarem Durchmesser mit in zwei einander gegenüberliegenden Scheiben geführten, von innen nach außen bzw. von außen nach innen verschiebbaren Platten, wobei die zwei einander gegenüberliegenden Scheiben in Richtung ihrer Drehachse gegeneinander verschiebbar sind und wobei sich die Platten von einer Scheibe zur anderen Scheibe hin in Umfangsrichtung gemessen verjüngen.

Die Erfindung betrifft weiters ein Getriebe aus zwei Rädern und wenigstens einem Lastübertragungsmittel,

Aus der DE-A-31 37 018 ist ein Rad mit veränderbarem Durchmesser bekannt. Bei diesem Rad sind zwischen zwei fest beabstandeten Scheiben Segmente angeordnet, die über einen Getriebemechanismus in radialen Schlitzen in den Scheiben verschiebbar sind. Die Segmente liegen nur in ihrer innersten Stellung aneinander an, so daß in jeder Stellung mit größerem Durchmesser im Mantelumfang Lücken entstehen, die sich beim Betrieb des Rades nachteilig auswirken. Weiters ist ein Getriebemechanismus zum radialen Verschieben der Segmente erforderlich.

Aus der US-A-4 453 923 ist ein Rad mit den Merkmalen der einleitenden Teile der unabhängigen Ansprüche 1 und 2 bekannt. Die die Umfangsfläche des Rades bildenden Platten sind bei dem bekannten Rad jedoch nicht miteinander gekuppelt. Deshalb ist es bei diesem bekannten Rad erforderlich, an den Platten schräge Führungsflächen oder -leisten vorzusehen, mit denen die Platten entweder an Führungselementen zwischen den Scheiben oder an der jeweils gegenüberliegenden Scheibe nach außen bzw. innen geführt werden. Da die nebeneinander angeordneten Platten nicht miteinander verschiebbar gekuppelt sind, liegen sie ohne feste Verbindung nebeneinander und das Rad gemäß der US-A-4 453 923 weist durch das Spiel zwischen den nebeneinander liegenden Platten eine geringe Laufruhe und Stabilität auf. Überdies ist eine zusätzliche Führung der Platten für die Bewegung radial nach außen bzw. innen erforderlich.

Bei dem in der US-A-999 530 angegebenen Rad werden dreieckförmigen Platten durch Speichen, die an der Innenseite der dreieckförmigen Platten gelagert und in einer Nabe auf der Welle geführt sind, und durch Arme, die mit ihrem einen Ende ebenfalls mit den Platten und mit ihrem anderen Ende mit einer Verstellmutter verbunden sind, radial und gegeneinander bewegt. Es ist ersichtlich, daß durch diese Anordnung keine größeren Drehmomente übertragbar sind. Die dreieckförmigen Platten sind über an ihren Seiten vorgesehene Rippen und Nuten aneinander geführt.

Das in der DE-C-493 825 beschriebene Riemenscheibengetriebe mit kegelförmigen Scheibenteilen weist den Nachteil der hohen achsialen Kräfte auf.

Der Erfindung liegt die Aufgabe zugrunde, ein Rad mit veränderbarem Durchmesser zu schaffen, das zur kraft- oder formschlüssigen Kraftübertragung von einem Lastübertragungsmittel, wie Riemen, Ketten od. dgl., auf den Umfang des Rades oder umgekehrt, verwendet werden kann.

Erfindungsgemäß wird dies einmal dadurch gelöst, daß die Platten entlang ihrer Seitenflächen durch Nut-Feder- Verbindungen miteinander gekuppelt sind, bei welchen jeweils eine runde, hinterschnittene Leiste an einer Platte in einer im Querschnitt ringförmig ausgebildeten Nut in der benachbarten Platte aufgenommen ist.

Die Aufgabe kann auch dadurch gelöst werden, daß die nebeneinander angeordneten Platten miteinander verschiebbar gekuppelt sind, daß die Verbindung der Platten entlang ihrer Seitenflächen eine Führung ist, bei der ein schräg nach außen ragender Ansatz der einen Platte in eine entsprechende Nut in der benachbarten Platte eingreift, und daß jede Platte je einen Ansatz und je eine Nut aufweist.

Im Vergleich zu bekannten Rädern mit kegelförmigen Scheiben, die mit Lastübertragungsmitteln zusammenwirken, welche die Scheiben bei Betrieb auseinanderdrücken, treten beim erfindungsgemäßen Rad erheblich kleinere, axiale Reibungs- oder Druckkräfte auf.

Beim erfindungsgemäßen Rad können zusätzlich Federn, welche die Platten von außen nach innen belasten, vorgesehen sein.

Um einen möglichst großen Änderungsbereich des Durchmessers des Rades zu erhalten, sind in den Scheiben Ausnehmungen für die in der jeweils gegenüberliegenden Scheibe geführten Platten vorhanden.

Die Platten werden an den Scheiben bevorzugt in sich in den Scheiben von innen nach außen erstreckenden Schlitzen geführt. Diese Schlitze können auch unter einem Winkel zur radialen Ausrichtung geneigt sein, wodurch sich eine vorteilhaftere Kräfteverteilung im Rad ergeben kann. Auch gekrümmte Schlitze sind möglich.

Im Rahmen der Erfindung kann vorgesehen sein, daß die Platten über Gleitflächen an einer Seitenfläche der Scheiben und über einen Führungsansatz in den Schlitzen geführt sind. Dadurch werden die Platten noch mit zusätzlichen, vergrößerten Gleitflächen geführt, wodurch eine höhere Stabilität der Führung der Platten erreicht wird.

Soll die Kraftübertragung zwischen Rad und Lastübertragungsmittel formschlüssig erfolgen, so kann erfindungsgemäß vorgesehen sein, daß an den Platten wenigstens je ein Gleitstück angeordnet ist, das entlang einer Gleitbahn etwa in Richtung der Drehachse des Rades verschiebbar ist, daß das Gleitstück in Umfangsrichtung gegen die Kraft von Federn oder Einlagen aus elastischem Werkstoff verschiebbar ist, und daß das Gleitstück wenigstens einen Mitnehmer trägt.

Durch die an den Platten vorgesehenen Gleitstücke, die dem Lastübertragungsmittel entsprechende Mitnehmer tragen, kann das Lastübertragungsmittel stets in der Mitte des Rades verbleiben, auch wenn sich dessen Durchmesser und Breite ändern. Dies erfolgt durch vorzugsweise zur Drehachse des Rades parallele Führungen, wobei die Führungen auch zur Drehachse geneigt sein können, um eine Zentrierung des Lastübertragungsmittels und der Gleitstücke im Bereich der Umfangsmittellinie des Rades zu gewährleisten.

Da der Zwischenraum zwischen den einzelnen Gleitstücken und deren Mitnehmern bei Veränderung des Durchmessers des Rades nicht immer der. Teilung des Lastübertragungsmittels entspricht, sind die Gleitstücke auch in Umfangsrichtung gegen die Kraft von Federn, z.B. gewellte Bandfedern oder Leisten aus Gummi oder einem ähnlich elastischen Werkstoff, an den Platten verschiebbar, wodurch einerseits eine Anpassung an die Teilung erfolgt und anderseits eine bessere Verteilung der Kraftübertragung vom Lastübertragungsmittel auf alle damit im Eingriff befindlichen Gleitstücke und weiters über die Federn auf die Platten erfolgt.

Durch Kombination zweier erfindungsgemäßer Räder und eines Lastübertragungsmittels erhält man ein stufenlos schaltbares Getriebe.

Weitere Einzelheiten und Merkmale der Erfindung ergeben sich aus den Unteransprüchen und der Beschreibung des in den Zeichnungen gezeigten Ausführungsbeispieles. Es zeigt
Fig. 1 ein Rad in der Stellung mit dem größtmöglichen Arbeitsdurchmesser des Rades,
Fig. 2 Das Rad in der Stellung mit dem kleinstmöglichen Arbeitsdurchmesser des Rades,

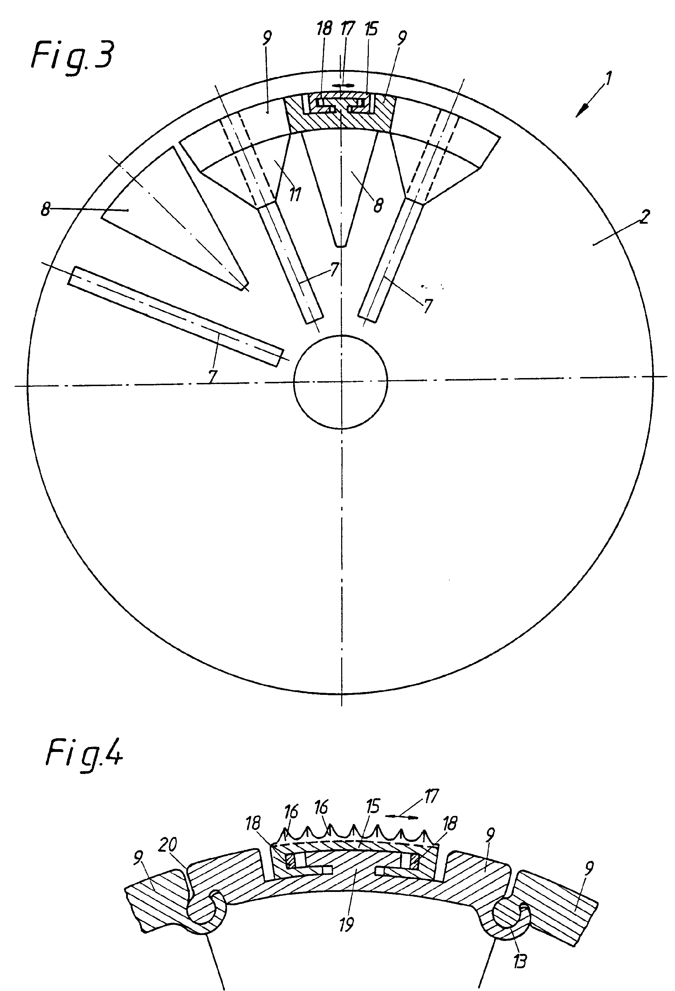

Fig. 3 einen Schnitt entlang der Linie III-III in Fig. 1,
Fig. 4 einen vergrößerten Schnitt analog Fig. 3 einer anderen Ausführungsform der Platten,
Fig. 5 eine andere Ausführungsform der Führungen zwischen den Platten,
Fig. 6 eine Platte mit einem Gleitstück, von außen gesehen,
Fig. 7 eine Innenansicht eines Stahl- oder Kunststoffzahnbandes,
Fig. 8 eine Ansicht des Gleitstückes in Richtung VIII in Fig. 6 mit dem Stahl- oder Kunststoffzahnband von Fig. 7, die
Fig. 9 bis 15 weitere mögliche Ausführungsformen von Lastübertragungsmitteln,
Fig. 16 im Schnitt eine Anordnung zum axialen Verschieben der Scheiben des Rades,
Fig. 17 einen Teil der Anordnung aus Fig. 16 und
Fig. 18 schematisch ein zweistufiges Getriebe mit vier erfindungsgemäßen Rädern.

In den Zeichnungen sind nicht immer alle Platten 9 eines Rades 1 dargestellt.

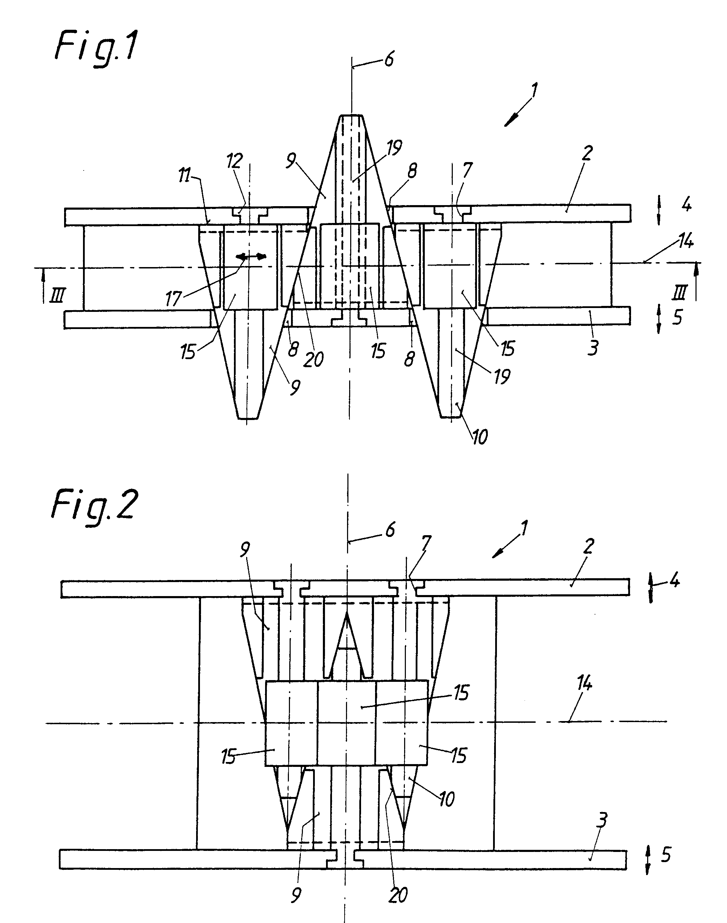

Das Rad 1 besteht aus zwei Scheiben 2 und 3, die entlang von Doppelpfeilen 4 und 5, d.h. in Richtung der Drehachse 6 des Rades 1 gegeneinander verschiebbar angeordnet sind und von innen nach außen verlaufende Schlitze 7 zur Führung der schmäler werdenden Platten 9 enthalten. Diese Schlitze 7 sind vorzugsweise radial nach außen geführt. Sie können jedoch auch in einem Winkel zur Radialen geneigt und/oder gekrümmt sein. Weiters enthalten die Scheiben 2 und 3 auch noch Ausnehmungen 8, durch die das Ende 10 der in der jeweils gegenüberliegenden Scheibe 3 bzw. 2 geführten Platten 9 beim Zusammenschieben der Scheiben 2 und 3 ragt (vgl. Fig. 1). Die Platten 9 sind über T-förmig ausgebildete Führungsansätze 12 in den entsprechenden Schlitzen 7 und durch Gleitflächen 11 an den Innenflächen der Scheiben 2 bzw. 3 geführt. Es versteht sich, daß die Führungen (Schlitze 7 und Führungsansätze 12) auch anders ausgebildet sein können. Wesentlich ist bloß eine formschlüssige Führung der Platten 9 an den Scheiben 2 und 3.

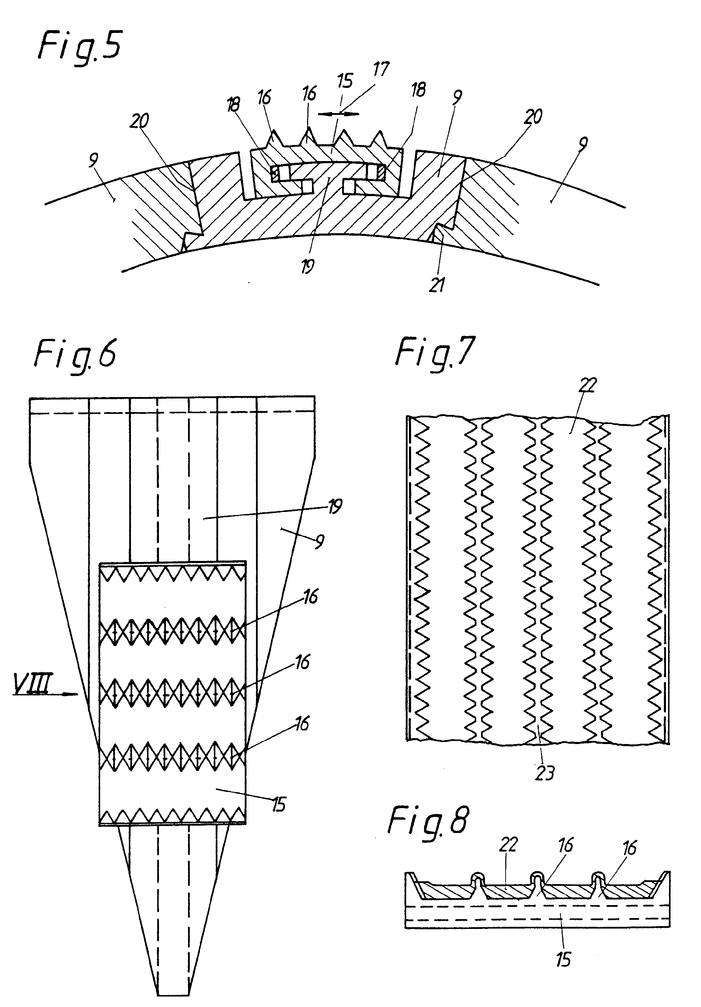

Weiters sind die Platten 9 untereinander im Bereich ihrer, beim Gegeneinanderverschieben der Scheibenräder 2 und 3 aneinander gleitenden Seitenflächen 20 durch Nut-Feder- Verbindungen 13 verbunden (Fig. 4). Es sind aber auch andere Formen der Führung, wie z.B. in Fig. 5 durch die Führung 21 dargestellt, möglich.

Eine mögliche Ausführungsform wäre auch die zusätzliche Anordnung von Federn, welche die Platten 9 nach innen belasten. Dadurch erreicht man eine höhere Laufruhe und Stabilität des Rades.

Schiebt man nun beispielsweise die beiden Scheiben 2 und 3 auseinander, so gleiten auch die Platten 9 in ihren Nut-Feder- Verbindungen 13 auseinander. Dadurch verringert sich die Breite der einzelnen Platten 9, gemessen an der Umfangsmittellinie 14, und die Platten 9 gleiten in ihren Schlitzen 7 nach innen, wodurch sich der Arbeitsumfang des Rades 1 verringert. Beim Zusammenschieben der Scheiben 2 und 3 (Verkleinerung des Abstandes zwischen diesen) vergrößert sich der Arbeitsumfang des Rades 1.

Zur formschlüssigen Verbindung des Rades 1 mit einem Lastübertragungsmittel 22 sind an den Platten 9 Gleitstücke 15 geführt, die dem Lastübertragungsmittel 22 entsprechende Mitnehmer 16 tragen.

Um Änderungen der Teilung am Rad 1, die dadurch entstehen, daß der Abstand zwischen den einzelnen Gleitstücken 15 beim Verändern des Durchmessers des Rades 1 nicht immer ein ganzzahliges Vielfaches der Teilung des Lastübertragungsmittels 22 bleibt, auszugleichen, sind die Gleitstücke 15 gegen den Widerstand von Federn 18 in Umfangsrichtung des Rades 1 entlang des Doppelpfeiles 17 verschiebbar angeordnet. Dadurch passen sich die Gleitstücke 15 immer an die Teilung des Lastübertragungsmittels 22 an. Die Federn 18 dienen auch als Kraftübertragungsmittel zwischen den Gleitstücken 15 und den Platten 9, um eine möglichst gleichmäßige Verteilung der Zugkraft des Lastübertragungsmittels 22 über den mit dem Lastübertragungsmittel 22 in Eingriff stehenden Teilumfang des Rades 1 zu gewährleisten.

Die Gleitstücke 15 sind weiters entlang einer Gleitbahn 19, die als eine in eine Nut versenkte, T-förmig ausgebildete Führung ausgebildet sein kann, die vom Gleitstück 15 umfaßt wird, etwa parallel zur Richtung der Drehachse des Rades 1 verschiebbar, um zu gewährleisten, daß sich die Gleitstücke 15 beim Verschieben der Scheiben 2 und 3 gegeneinander immer in einer Linie im Bereich der Umfangsmittellinie 14 des Rades 1 befinden. Auch die Führung der Gleitstücke an den Platten 9 kann anders als T-förmig ausgebildet sein. Wichtig ist eine formschlüssige Führung.

Das in Fig. 7 gezeigte Lastübertragungsmittel 22 weist an seiner den Platten 9 des Rades 1 zugekehrten Innenseite mehrere Reihen von Vertiefungen 23 auf. Diese Vertiefungen 23 besitzen eine den Mitnehmern 16 entsprechende Form, so daß letztere in die Vertiefungen 23, wie in Fig. 8 gezeigt, eingreifen können.

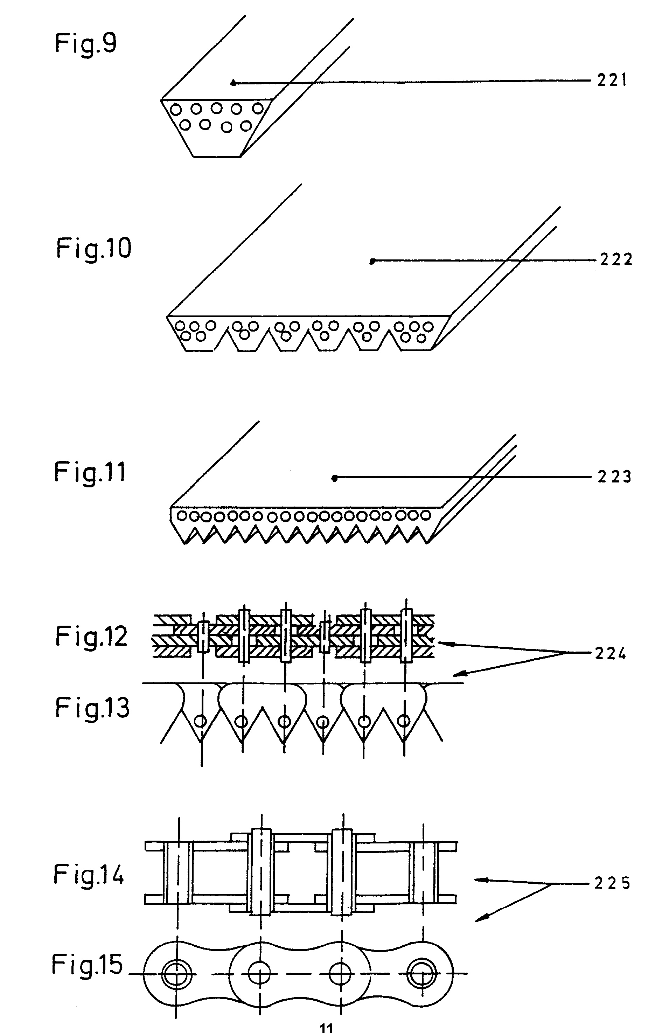

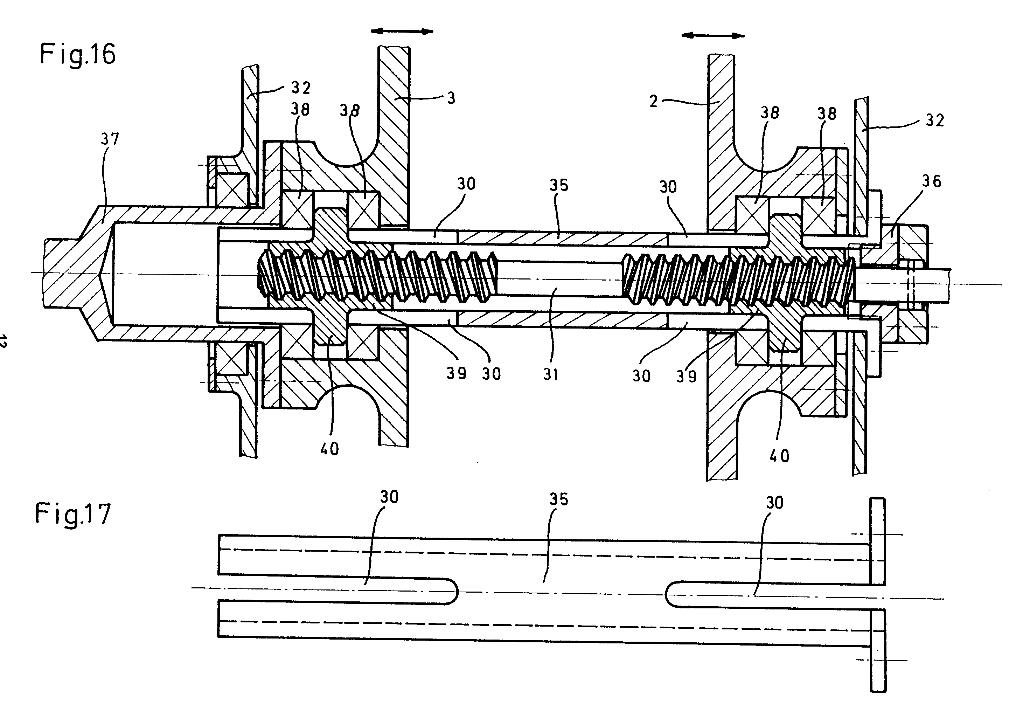

In den Fig. 9 bis 15 sind weitere mögliche Ausführungsformen für Lastübertragungsmittel 22 dargestellt und zwar: Fig. 9 einen Keilriemen 221, Fig. 10 einen Verbundkeilriemen 222, Fig. 11 einen Keilrippenriemen 223, Fig. 12 und 13 eine Zahnkette 224 in Grund- und Aufriß und Fig. 14 und 15 eine Rollen- oder Hülsenkette 225 in Grund- und Aufriß.

Bei der in Fig. 16 gezeigten Anordnung zum axialen Verschieben der Scheiben 2 und 3 sind die Scheiben 2 und 3 auf einer hohlen Führungsachse 35 über paarweise angeordnete Lager 38 axial verschiebbar gelagert. Die Führungsachse 35 ist mit dem Gehäuse 32 fest verbunden, z.B. verschraubt. In der hohlen Führungsachse 35 ist eine Gewindespindel 31 angeordnet, die zwei Gewindebereiche mit gegensinniger Steigung besitzt. Auf den Gewindebereichen ist je eine Verschubmutter 39 angeordnet, die in der hohlen Führungsachse 35 gleitet. Die Verschubmuttern 39 besitzen je zwei Ansätze 40, die durch Schlitze 30 in der Führungsachse 35 ragen und jeweils zwischen ein Paar von Lagern 38, vorzugsweise Schrägkugellager, eingreifen.

Die Gewindespindel 31 ragt auf einer Seite aus der Führungsachse 35 und dem Gehäuse 32 heraus und ist mit einem nicht dargestellten Stellglied verbunden. Durch Verdrehen der Gewindespindel 31 werden die beiden Scheiben 2 und 3 je nach Drehrichtung der Gewindespindel 31 über die Verschubmuttern 39 und die Lager 38 zueinander oder auseinander bewegt, wodurch sich der Durchmesser des Rades verändert.

Auf der der aus dem Gehäuse 32 herausragenden Gewindespindel 31 gegenüberliegenden Seite des Gehäuses 32 ragt eine Antriebs- oder Abtriebswelle 37, die mit der Scheibe 3 des Rades 1 fest verbunden ist, aus dem Gehäuse 32. Die Scheibe 2 des Rades 1 ist mit der Scheibe 3 und somit mit der Antriebs- oder Abtriebswelle 37 über die Platten 9 (nicht dargestellt) verbunden und läuft frei auf der Führungsachse 35 mit.

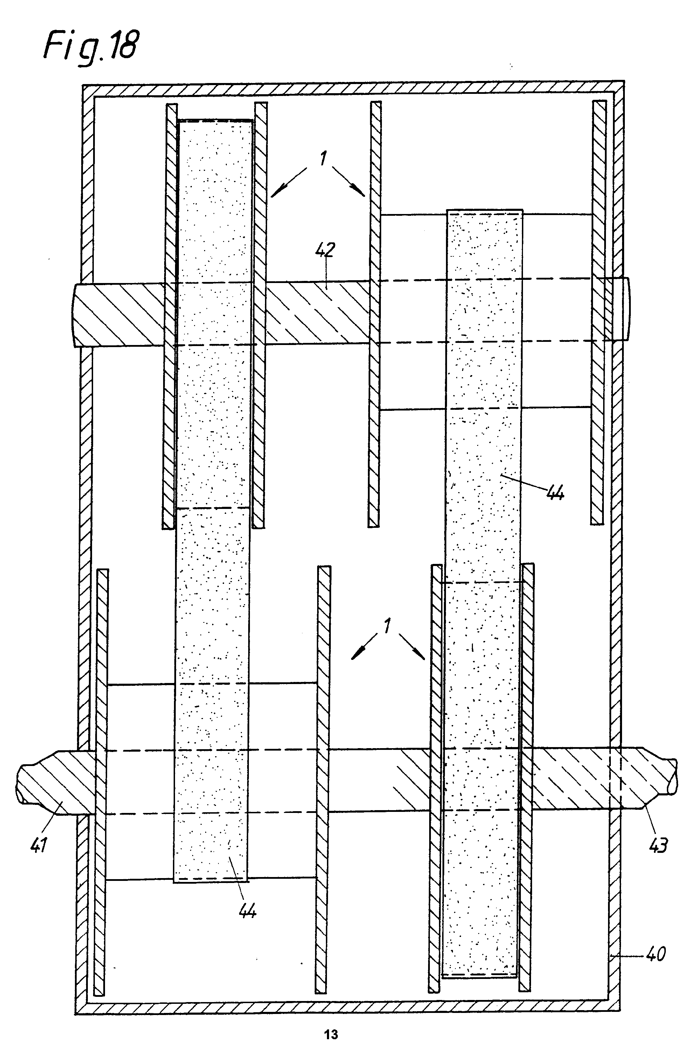

In Fig. 18 ist schematisch ein zweistufiges Getriebe in einem Gehäuse 40 mit vier erfindungsgemäßen Rädern 1, zwei Lastübertragungsmitteln 44, einer Antriebswelle 41, einer Zwischenwelle 42 und einer Abtriebswelle 43 dargestellt.

## Patentansprüche

1. Rad (1) mit veränderbarem Durchmesser mit in zwei einander gegenüberliegenden Scheiben (2, 3) wechselseitig geführten, von innen nach außen bzw. von außen nach innen verschiebbaren Platten (9), wobei die zwei einander gegenüberliegenden Scheiben (2, 3) in Richtung ihrer Drehachse (6) gegeneinander verschiebbar sind und wobei sich die Platten (9) von einer Scheibe (2 oder 3) zur anderen Scheibe (3 oder 2) hin in Umfangsrichtung gemessen verjüngen, dadurch gekennzeichnet, daß die Platten (9) entlang ihrer Seitenflächen (20) durch Nut-Feder- Verbindungen (13) miteinander gekuppelt sind, bei welchen jeweils eine runde, hinterschnittene Leiste an einer Platte (9) in einer im Querschnitt ringförmig ausgebildeten Nut in der benachbarten Platte (9) aufgenommen ist.

2. Rad (1) mit veränderbarem Durchmesser mit in zwei einander gegenüberliegenden Scheiben (2, 3) wechselseitig geführten, von innen nach außen bzw. von außen nach innen verschiebbaren Platten (9), wobei die zwei einander gegenüberliegenden Scheiben (2, 3) in Richtung ihrer Drehachse (6) gegeneinander verschiebbar sind und wobei sich die Platten (9) von einer Scheibe (2 oder 3) zur anderen Scheibe (3 oder 2) hin in Umfangsrichtung gemessen verjüngen, dadurch gekennzeichnet, daß die nebeneinander angeordneten Platten (9) miteinander verschiebbar gekuppelt sind, daß die Verbindung der Platten (9) entlang ihrer Seitenflächen (20) eine Führung (21) ist, bei der ein schräg nach außen ragender Ansatz der einen Platte (9) in eine entsprechende Nut in der benachbarten Platte (9) eingreift, und daß jede Platte (9) je einen Ansatz und je eine Nut aufweist.

3. Rad nach Anspruch 1 oder 2, dadurch gekennzeichnet, daß in den Scheiben (2, 3) Ausnehmungen (8) für die in der jeweils gegenüberliegenden Scheibe (3, 2) geführten Platten (9) vorhanden sind.

4. Rad nach einem der Ansprüche 1 bis 3, dadurch gekennzeichnet, daß die Platten (9) an den Scheiben (2, 3) in sich in den Scheiben (2, 3) von innen nach außen erstreckenden Schlitzen (7) geführt sind.

5. Rad nach Anspruch 4, dadurch gekennzeichnet, daß die Platten (9) über Gleitflächen (11) an einer Seitenfläche der Scheiben (2, 3) und über einen Führungsansatz (12) in den Schlitzen (7) geführt sind.

6. Rad nach Anspruch 5, dadurch gekennzeichnet, daß der Führungsansatz (12) T-förmig ausgebildet ist und der Schlitz (7) dem Führungsansatz (12) entsprechend profiliert ist.

7. Rad nach einem der Ansprüche 1 bis 6, dadurch gekennzeichnet, daß an den Platten (9) wenigstens je ein Gleitstück (15) angeordnet ist, das entlang einer Gleitbahn (19) etwa in Richtung der Drehachse (6) des Rades (1) verschiebbar ist, daß das Gleitstück (15) in Umfangsrichtung gegen die Kraft von Federn (18) oder Einlagen aus elastischem Werkstoff verschiebbar ist, und daß das Gleitstück (15) wenigstens einen Mitnehmer (16) trägt.

8. Rad nach Anspruch 7, dadurch gekennzeichnet, daß die Gleitbahn (19) als in eine Nut versenkte, hinterschnittene, z.B. T-förmig ausgebildete Führung ausgebildet ist, die vom Gleitstück (15) umfaßt wird.

9. Rad nach einem der Ansprüche 1 bis 8, dadurch gekennzeichnet, daß zum Verschieben der Scheiben (2, 3) Verschubmuttern (39) vorgesehen sind, die mit einer Gewindespindel (31) mit zwei Gewindebereichen mit gegensinniger Steigung im Eingriff sind.

10. Rad nach Anspruch 9, dadurch gekennzeichnet, daß die Gewindespindel (31) in einer mit einem Gehäuse (32) fest verbundenen Führungsachse (35) angeordnet ist.

11. Rad nach Anspruch 9 oder 10, dadurch gekennzeichnet, daß die Scheiben (2, 3) auf der Führungsachse (35) durch je ein Paar von Wälzlagern (38) gelagert und axial geführt sind.

12. Rad nach einem der Ansprüche 9 bis 11, dadurch gekennzeichnet, daß an den Verschubmuttern (39) wenigstens ein Ansatz (40) vorgesehen ist, der durch wenigstens einen in der Führungsachse (35) vorgesehenen Schlitz (30) ragt und zwischen ein Paar von Wälzlagern (38) in den Scheiben (2, 3) eingreift.

13. Rad nach einem der Ansprüche 9 bis 12, dadurch gekennzeichnet, daß die Gewindespindel (31) auf einer Seite aus der Führungsachse (35) ragt.

14. Rad nach einem der Ansprüche 9 bis 13, dadurch gekennzeichnet, daß eine Antriebs- oder Abtriebswelle (37) mit wenigstens einer der Scheiben (2, 3) verbunden ist.

15. Getriebe aus zwei Rädern und wenigstens einem Lastübertragungsmittel, gekennzeichnet durch Räder (1) nach einem der Ansprüche 1 oder 2 und 3.

## Claims

1. Wheel (1) with a variable diameter with mutually guided plates (9) shiftable from within to the outside and vice versa, whereby the two opposing disks (2, 3) are shiftable in the direction of the axis of rotation and whereby the plates (9) taper off from one disk (2 or 3) to the other disk (3 or 2) measured against the circumferential direction with the characteristic feature that plates (9) are coupled by slut and key joints along their sides whereby a round, undercut rail in one plate is taken in a groove formed annularly in cross-section in the adjacent plate (9).

2. Wheel (1) with a variable diameter with mutually guided plates (9) shiftable from within to the outside and vice versa in two opposing disks (2, 3) whereby the two opposing disks (2 or 3) are mutually shiftable in the direction of their axis of rotation (6) and the plates (9) taper off from one disk (2 or 3) to the other disk (3 or 2) measured against the circumferential direction with the characteristic feature that the adjacent plates (9) are coupled shiftably so that the junction of the plates (9) along their lateral faces (20) is a guide (21) in which a lug jutting out slantingly to the outside meshes into a corresponding groove in the adjacent plate (9) and that each plate (9) shows one lug and one groove each.

3. Wheel (1) according to claim 1 or 2 with the characteristic feature that recesses (8) for the plates (9) guided in the respectively opposing disks (3, 2) are in the disks (2, 3).

4. Wheel (1) according to claims 1 to 3 with the characteristic feature that the plates (9) are guided in slits (7) reaching from the inside of the disks (2, 3) to the outside of the disks (2, 3).

5. Wheel (1) according to claim 4 with the characteristic feature that the plates (9) are guided over sliding surfaces (11) to the lateral face of the disks (2, 3) and over a guide (12) in the slits (7).

6. Wheel (1) according to claim 5 with the characteristic feature that the guide (12) is T-shaped and the slits (7) are profiled accordingly.

7. Wheel (1) according to one of the claims 1 to 6 with the characteristic feature that at least one slider (15) each is arranged on the plates (9) which is movable along a slide (19) in direction of the axis of rotation (6) of the wheel (1), and that the slider (15) is shiftable in circumferential direction against the force of keys (18) or insertions made of an elastic material, and that the slider (15) carries at least one cam (16).

8. Wheel (1) according to claim 7 with the characteristic feature that the slide (19) is realized as an undercut, possibly T-shaped guide flush-fitted in a groove which is enclosed by the slider (15).

9. Wheel (1) according to one of the claims 1 to 8 with the characteristic feature that adjusting nuts (39) are provided for shifting the disks (2, 3) which mesh with a screw spindle (31) with two ranges of the gear with an opposing pitch.

10. Wheel (1) according to claim 9 with the characteristic feature that the screw spindle (31) is placed in a guide axle (35) firmly joined to a casing (32).

11. Wheel (1) according to claim 9 or 10 with the characteristic feature that the disks (2, 3) are run in a guide axle (35) by a pair of anti-friction bearings (38) each and guided axially.

12. Wheel (10 according to one of the claims 9 to 11 with the characteristic feature that at least one lug (40)is provided for at the nuts (39) which projects through at least one slit (30) provided in the guide axle (35) and which meshes into a pair of anti-friction bearings (38) in the disks (2, 3).

13. Wheel (1) according to one of the claims 9 to 12 with the characteristic feature that the screw spindle (31) juts out on one side of the guide axle (35).

14. Wheel (1) according to one of the claims 9 to 13 with the characteristic feature that a drive shaft or output drive shaft (37) is joined to at least one of the disks (2, 3).

15. Gear consisting of two wheels and at least one means of the transmission of load typified by wheels (1) according to one of the claims 1 or 2 or 3.

## Revendications

1. Roue (1) à diamètre variable avec des plaques déplaçables (9) de l'intérieur vers l'extérieur et de l'extérieur vers l'intérieur, guidées alternativement dans deux disques (2,3) situés l'un en face de l'autre , disques (2,3) qui sont déplaçables l'un vers l'autre en direction de leur axe de rotation (6); roue où les plaques (9) diminuent mesurément d'un disque (2 ou 3) à un autre disque (3 ou 2) en direction de la périphérie et qui est caractérisée par le fait que les plaques (9) sont couplées entre elles le long de leurs surfaces latérales (20) par des assemblages à rainure et languette (13) où une baguette ronde contre-dépouillée sur une plaque (9) vient à chaque fois se loger dans la plaque voisine (9) dans une rainure de coupe annulaire.

2. Roue (1) à diamètre variable avec des plaques déplaçables (9) de l'intérieur vers l'extérieur et de l'extérieur vers l'intérieur, guidées alternativement dans deux disques (2,3) situés l'un en face de l'autre, disques (2,3) qui sont déplaçables l'un vers l'autre en direction de leur axe de rotation (6); roue où les plaques (9) diminuent mesurément d'un disque (2 ou3) à un autre disque (3 ou 2) en direction de la périphérie et qui est caractérisée par le fait que les plaques (9) placées l'une à côté de l'autre sont couplées de façon à se déplacer ensemble, que la connection des plaques (9) le long de leurs surfaces latérales (20) est un guide (21) où l'extrémité de l'une des plaques (9) dépassant obliquement vers l'extérieur s'encastre dans la rainure correspondante dans la plaque voisine (9), et que chaque plaque (9) présente à la fois une extrémité et une rainure.

3. Roue d'après la spécification 1 ou 2, caractérisée par le fait qu'il y a des creux (8) dans les disques (2,3) pour les plaques guidées (9) à chaque fois dans le disque (3,2) placé en face.

4. Roue d'après l'une des spécifications 1 à 3, caractérisée par le fait que les plaques (9) contre les disques (2,3) sont conduites dans les disques (2,3) dans les fentes (7) s'étendant de l'intérieur vers l'extérieur.

5. Roue d'après la spécification 4, carac térisée par le fait que les plaques (9) sont conduites par des surfaces de glissement (11) contre une surface latérale des disques (2,3) et par un bout pilote (12) dans les rainures (7).

6. Roue d'après la spécification 5, caractérisée par le fait que le bout pilote (12) est façonné en forme de T et que la rainure (7) est profilée pour correspondre au bout pilote (12).

7. Roue d'après l'une des spécifications 1 à 6, caractérisée par le fait qu'il y a au moins une pièce coulissante (15) montée aux plaques (9) qui est déplaçable le long d'une glissière (19) par exemple en direction de l'axe de rotation (6) de la roue (1), que la pièce coulissante (15) est mobile en direction de la périphérie contre la force de ressorts (18) ou de garnitures en matériau élastique, et que la pièce coulissante (15) porte au moins un entraîneur (16).

8. Roue d'après la spécification 7, caractérisée par le fait que la glissière (19) est un guide fait en forme de T, contre-dépouillé, enfoncé dans une rainure qui est comprise dans la pièce coulissante (15).

9. Roue d'aprés l'une desspécifications 1 à 8, caractérisée par le fait que des écrous mobiles (39) sont prévus pour déplacer les disques (2,3), écrous qui sont en prise avec une broche filetée (31) qui comporte deux zones de filetage avec des pas en sens inverse.

10. Roue d'après la spécification 9, caractérisée par le fait que la broche filetée (31) est placée dans un essieu directeur (35) relié à un bâti (32).

11. Roue d'après les spécifications 9 ou 10, caractérisée par le fait que les disques (2,3) sont logés et conduits axialement sur l'essieu directeur (35) par une paire de paliers à roulement (38).

12. Roue d'après l'une des spécifications 9 à 11, caractérisée par le fait qu'au moins un bout (40) est prévu sur les écrous mobiles (39) qui s'encastre dans au moins une rainure (30) prévue dans l'essieu directeur (35) et s'engrène dans les disques (2,3) entre une paire de paliers à roulement (38).

13. Roue d'après l'une des spécifications 9 à 12, caractérisée par le fait que la broche filetée (31) dépasse d'un côté de l'essieu directeur (35).

14. Roue d'après l'une des spécifications 9 à 13, caractérisée par le fait qu'un arbre menant ou mené (37) est relié à au moins un des disques (2,3).

15. Engrenage composé de deux roues et d'au moins un organe de transmission de charge, caractérisé par des roues (1) d'après l'une des spécificités 1 ou 2 et 3.
